# EUROPEAN PATENT SPECIFICATION

(11) **EP 3 826 242 B1**
(45) Date of publication and mention of the grant of the patent: **10.08.2022**
(21) Application number: 18926933.5
(22) Date of filing: 19.07.2018
(51) Int. Cl.: H04L 9/40, G06F 21/55

(54) **CYBER ATTACK INFORMATION ANALYZING PROGRAM, CYBER ATTACK INFORMATION ANALYZING METHOD, AND INFORMATION PROCESSING DEVICE**
PROGRAMM ZUR ANALYSE VON CYBERANGRIFFSINFORMATIONEN, VERFAHREN ZUR ANALYSE VON CYBERANGRIFFSINFORMATIONEN UND INFORMATIONSVERARBEITUNGSVORRICHTUNG
PROGRAMME D'ANALYSE D'INFORMATIONS DE CYBERATTAQUE, PROCÉDÉ D'ANALYSE D'INFORMATIONS DE CYBERATTAQUE ET DISPOSITIF DE TRAITEMENT D'INFORMATIONS

(43) Date of publication of application: 26.05.2021
(73) Proprietor: FUJITSU LIMITED, Kanagawa 211-8588 (JP)
(72) Inventor: TANIGUCHI, Tsuyoshi, Kawasaki-shi, Kanagawa 211-8588 (JP)
(74) Representative: Hoffmann Eitle
(86) International application number: PCT/JP2018/027140
(87) International publication number: WO 2020/017000

(56) References cited:
- JP-A- 2018 032 356
- US-A1- 2005 249 214
- US-A1- 2010 138 919
- Tsutsumi Tsutsumi; Shuta Morishima; Shogo Suzuki; Kenichi Shibahara; Katsunari Yoshioka; Tsutomu Matsumoto: "Finding Network Address Blocks Intensively Used for Cyber Attacks", IEICE Technical Report, vol. 114, no. 489, 24 February 2015 (2015-02-24), pages 1-2, XP055677103,
- Masaki Ishiguro; Hironobu Suzuki; Tomoharu Shimizu; Ichiro Murase: "Analysis of Distribution of Sender IP Addresses of Unauthorized Packets on the Internet", IPSJ symposium series, vol. 2006, no. 11, 25 October 2006 (2006-10-25), pages 507-512, XP009524883, ISSN: 1344-0640

## Description

### TECHNICAL FIELD

An embodiment of the present invention relates to a cyberattack information analysis program, a cyberattack information analysis method, and an information processing apparatus.

### BACKGROUND ART

In recent years, cyberattacks such as unauthorized access through a network have become a serious problem. In order to take measures against the cyberattack, it is important to analyze huge cyberattack information that is observed every day, specify an attack source, and monitor the attack source.

As a technology of specifying an attack source from huge cyberattack information, a technology is known that extracts a combination of a plurality of attacked destination communication devices having the same attack source communication device at a detection time when a network device detects the attack and in a period when an attack is performed including the detection time.

### CITATION LIST

### PATENT DOCUMENT

Patent Document 1: Japanese Laid-open Patent Publication No. 2015-76863
Patent Document 2: US 2010/138919 A1

Patent document 2 describes a process for detecting anomalous network traffic in a communications network, the process including: generating reference address distribution data representing a statistical distribution of source addresses of packets received over a first time period, the received packets being considered to represent normal network traffic; generating second address distribution data representing a statistical distribution of source addresses of packets received over a second time period; and determining whether the packets received over the second time period represent normal network traffic on the basis of a comparison of the second address distribution data and the reference address distribution data.

### SUMMARY OF INVENTION

### TECHNICAL PROBLEM

However, there is an extremely high possibility that an IP address used for the cyberattack or the like is a single-use IP address. Even if such a single-use IP address is analyzed, there is a case a labor for this analysis is wasted. Therefore, a work to specify a significant IP address for analysis from among a large number of IP addresses used for the cyberattack has been needed, and an analyzer who has a limited work time in busy daily work takes a lot of troubles with the analysis.

According to one aspect, an object is to provide a cyberattack information analysis program, a cyberattack information analysis method, and an information processing apparatus that can assist to specify significant information for analysis of cyberattacks.

### SOLUTION TO PROBLEM

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. In a first example, a cyberattack information analysis program causes a computer to execute a collecting process, a specifying process, a determining process, and an outputting process. The collecting process collects a plurality of pieces of cyberattack information. The specifying process analyzes the plurality of pieces of collected cyberattack information, specifies a plurality of addresses of cyberattack sources included in the plurality of pieces of cyberattack information, and specifies a period when each of the specified addresses of the plurality of cyberattack sources is observed. The determining process determines an address range or some addresses included in the address range as monitoring targets according to a result of comparing a first period distribution of an observed period corresponding to the plurality of specified addresses and a second period distribution of an observed period for each address range. The outputting process outputs information regarding the determined address range or some addresses included in the address range.

### ADVANTAGEOUS EFFECTS OF INVENTION

According to one embodiment of the present invention, it is possible to assist to specify significant information for analysis of cyberattacks.

### BRIEF DESCRIPTION OF DRAWINGS

FIG. 1 is a block diagram illustrating an exemplary functional configuration of an information processing apparatus according to an embodiment.
FIG. 2 is an explanatory diagram for explaining a cyber threat intelligence.
FIG. 3 is a flowchart illustrating an example of preprocessing.
FIG. 4 is an explanatory diagram for explaining an example of element extraction.
FIG. 5A is an explanatory diagram illustrating an example of IP address group information.
FIG. 5B is an explanatory diagram illustrating an example of cyber threat intelligence and IP address group information.
FIG. 6 is a flowchart illustrating an example of a survival period learning process.
FIG. 7A is an explanatory diagram illustrating an example of the IP address group information.
FIG. 7B is an explanatory diagram illustrating an example of the cyber threat intelligence and IP address group information.
FIG. 8 is a flowchart illustrating an example of a detection process.
FIG. 9 is an explanatory diagram illustrating an example of survival period information.
FIG. 10 is an explanatory diagram illustrating an example of an output list.
FIG. 11A is an explanatory diagram for explaining a distribution of survival periods.
FIG. 11B is an explanatory diagram for explaining the distribution of the survival periods.
FIG. 12 is a block diagram illustrating an exemplary hardware configuration of the information processing apparatus according to the embodiment.

### DESCRIPTION OF EMBODIMENTS

Hereinafter, a cyberattack information analysis program, a cyberattack information analysis method, and an information processing apparatus according to an embodiment will be described with reference to the drawings. Configurations with the same functions in the embodiment are denoted by the same reference signs, and redundant description will be omitted. Note that the cyberattack information analysis program, the cyberattack information analysis method, and the information processing apparatus described in the following embodiment are merely examples, and do not limit the embodiment. Additionally, each of the embodiments below may be appropriately combined unless otherwise contradicted.

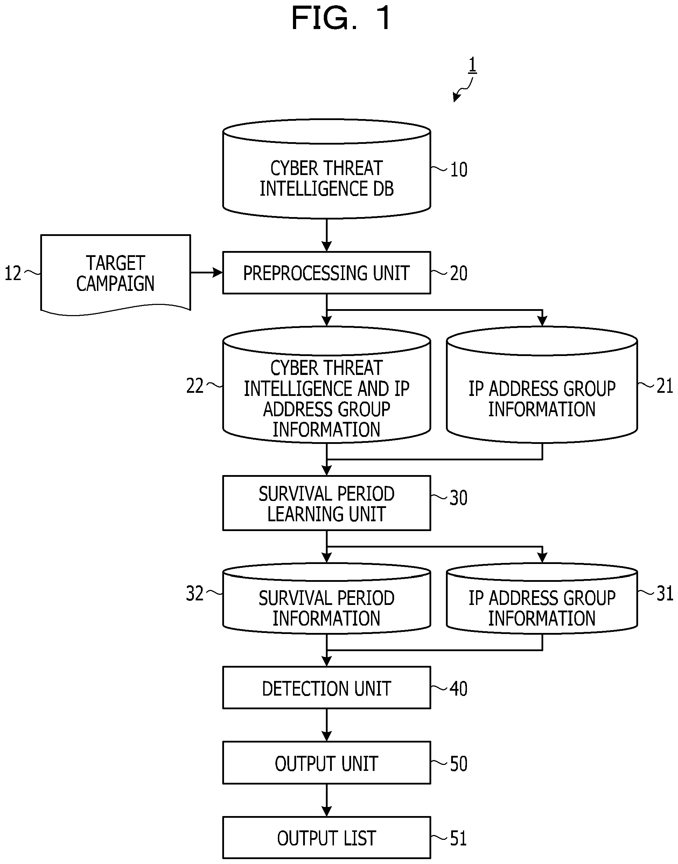

FIG. 1 is a block diagram illustrating an exemplary functional configuration of an information processing apparatus according to the embodiment. An information processing apparatus 1 according to the embodiment is, for example, a computer such as a personal computer (PC).

As illustrated in FIG. 1, the information processing apparatus 1 receives an input of a target campaign 12 to be processed among campaigns related to the cyberattack. Next, the information processing apparatus 1 collects a cyber threat intelligence corresponding to the target campaign 12 among a plurality of cyber threat intelligences stored in a cyber threat intelligence DB 10.

Note that the campaign is a name applied to a series of cyberattack activities (collection of plurality of cyberattacks) by the same attacker, the same attack force, and the same attack operation. For example, a user (analyzer) inputs a campaign name or a malware name corresponding to a campaign to be analyzed as the target campaign 12. Furthermore, for example, a list of campaign names to be processed regarding the target campaign 12 may be input.

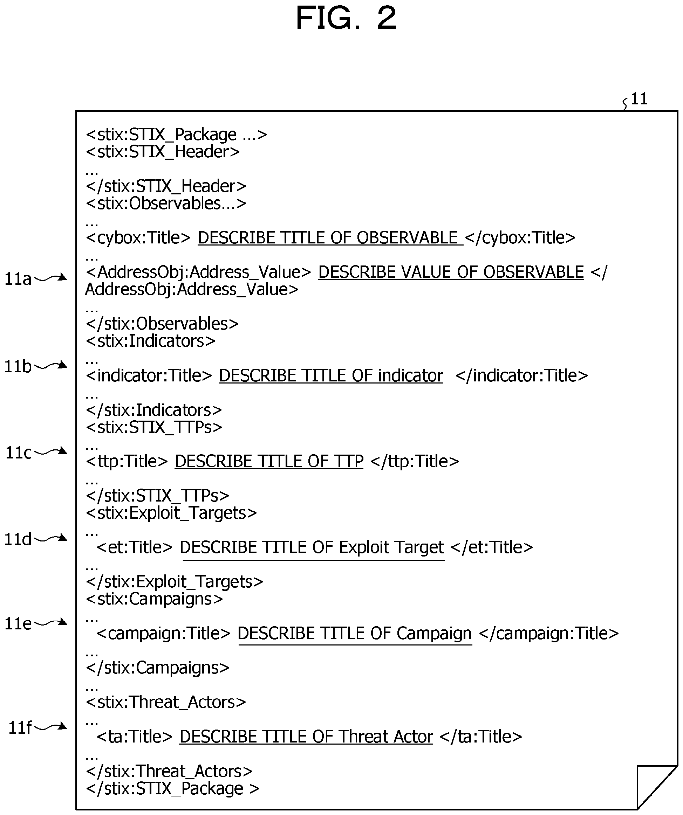

FIG. 2 is an explanatory diagram for explaining the cyber threat intelligence. As illustrated in FIG. 2, in a cyber threat intelligence 11, information regarding cyberattacks is described in a format such as the Structured Threat Information eXpression (STIX). For example, the STIX includes eight information groups including cyberattack activities (Campaigns), attackers (Threat_Actors), tactics, techniques, and procedures (TTPs), detection indicators (Indicators), observables (Observables), incidents (Incidents), courses of action (Courses_Of_Action), and attack targets (Exploit_Targets).

In other words, the cyber threat intelligence 11 is an example of cyberattack information. Furthermore, at the time of STIX version 1.1.1, the cyber threat intelligence 11 is described in an eXtensible Markup Language (XML) format as illustrated in FIG. 2.

For example, in an area 11a sandwiched by tags of "Observables", an observed IP, domain, malware hash value, and the like are described. In an area 11b sandwiched by tags of "Indicators", information indicating an indicator that characterizes a cyberattack evaddressent is individually described. Specifically, in the area 11b, an indicator that characterizes the cyberattack is described together with a tool used to create a detection indicator from a type of the detection indicator, an observable related to the detection indicator, an attack stage phase, a trace, and the like.

Furthermore, in an area 11c sandwiched by tags of "TTPs", an attack way that is used, for example, spam mail, malware, a watering hole attack, and the like is described. Furthermore, in an area 11d sandwiched by tags of "Exploit_Targets", information indicating a weak point of an asset to be a target of an attack in a cyberattack event such as weak points of software and a system to be attacked, from a viewpoint of vulnerability, the type of vulnerability, settings, configurations, and the like is individually described.

Furthermore, in an area 11e sandwiched by tags of "Campaigns", a name of a series of attacks (campaign) or the like is described. In other words, in the area 11e, information regarding the campaign of the cyberattack is described. By referring to the name of the campaign in the area 11e, it is possible to identify which campaign the cyberattack with respect to the cyber threat intelligence 11 belongs to.

Furthermore, in an area 11f sandwiched by tags of "Threat_Actors", information regarding a person/organization for contributing to the cyberattack is individually described from viewpoints of a type of the attacker of the cyberattack, a motive of the attacker, a skill of the attacker, an intention of the attacker, or the like. Specifically, in the area 11f, an IP address of an unauthorized access source (attack source), a mail address, or information regarding an account of a social network service is described.

In this way, in the areas 11a to 11f of the cyber threat intelligence 11, together with the name of the campaign indicating the campaign of the cyberattack, the information indicating the feature of the cyberattack such as the observables (IP, domain, hash value, or the like) of the cyberattack or the TTP, that is feature information (detection indicator) of the cyberattack is described. Note that, as a source used to share the cyber threat intelligence 11, there are Open Threat Exchange (OTX) that is provided by AlienVault and can be used for free, and the like. Furthermore, if a platform for managing the cyber threat intelligence 11 is used, it is possible to confirm content of the cyber threat intelligence 11 or to see a relationship between the cyber threat intelligences 11.

Next, the information processing apparatus 1 analyzes the collected cyber threat intelligence 11 and specifies a plurality of addresses (for example, IP address) of cyberattack sources of the target campaign 12. Furthermore, the information processing apparatus 1 specifies a period when each of the specified addresses is observed (hereinafter, referred to as survival period) by analyzing the collected cyber threat intelligence 11.

Next, the information processing apparatus 1 compares an overall distribution of the survival periods corresponding to the plurality of specified addresses and a distribution of survival periods for each address range. Next, the information processing apparatus 1 determines an address range or some addresses included in the address range as a monitoring target according to the comparison result between the overall distribution and the distribution for each address range.

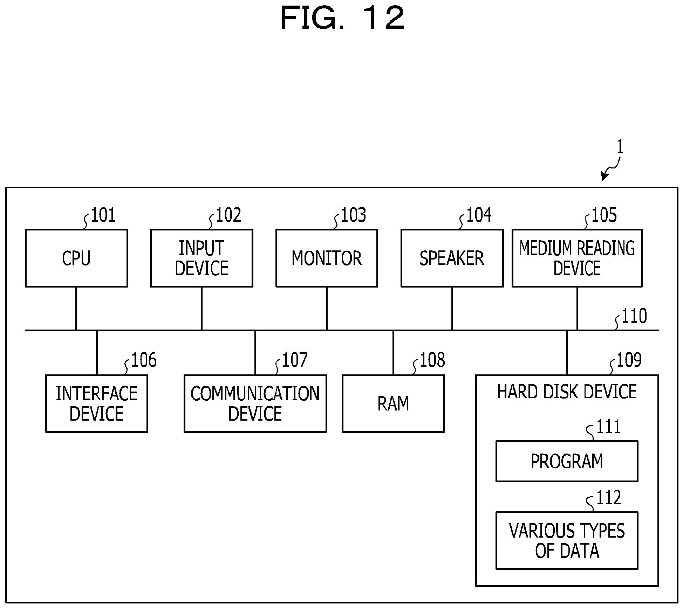

Next, the information processing apparatus 1 outputs information regarding the determined address range or some addresses included in the address range, for example, as an output list 51 in a list format. For example, the information processing apparatus 1 outputs the output list 51 to a monitor 103 (refer to FIG. 12) or the like.

From the output list 51 that has been output, an analyzer (user) can easily find an address range of which a survival period of an attack source address is different from that of the overall distribution and some addresses included in the address range as a monitoring target.

Next, details of the information processing apparatus 1 will be described. The information processing apparatus 1 includes a preprocessing unit 20, a survival period learning unit 30, a detection unit 40, and an output unit 50.

The preprocessing unit 20 receives an input of the target campaign 12, collects the cyber threat intelligence 11 corresponding to the target campaign 12 among the plurality of cyber threat intelligences 11 stored in the cyber threat intelligence DB 10, and executes preprocessing. In other words, the preprocessing unit 20 is an example of a collection unit.

Specifically, the preprocessing unit 20 collects the cyber threat intelligence 11 corresponding to the target campaign 12 from among the plurality of cyber threat intelligences 11 stored in the cyber threat intelligence DB 10 and executes the preprocessing, and stores the data on which the preprocessing has been executed in IP address group information 21 and cyber threat intelligence and IP address group information 22.

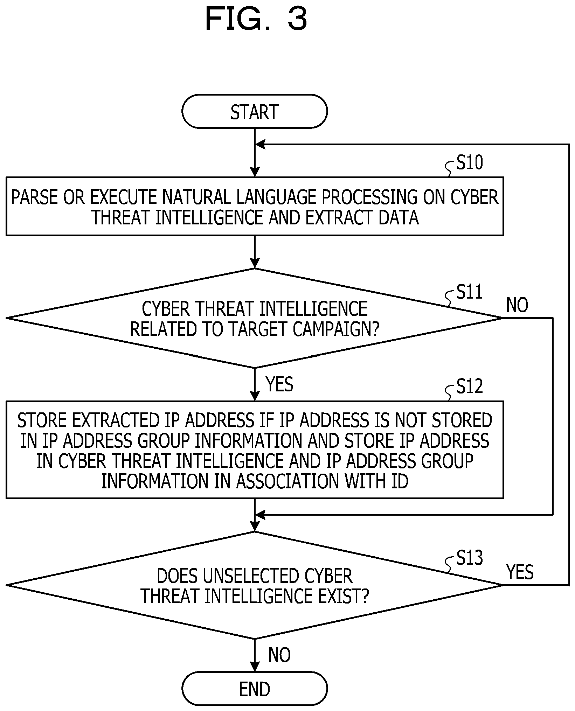

FIG. 3 is a flowchart illustrating an example of the preprocessing. As illustrated in FIG. 3, when the input of the target campaign 12 is received and the preprocessing is started, the preprocessing unit 20 parses or executes natural language processing on the cyber threat intelligence 11 stored in the cyber threat intelligence DB 10 and extracts necessary data (element)(S10).

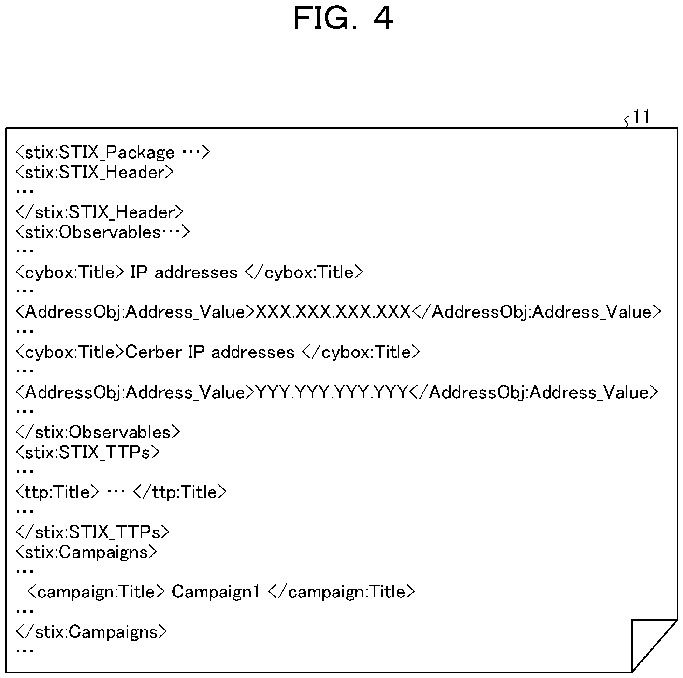

FIG. 4 is an explanatory diagram for explaining an example of element extraction. As illustrated in FIG. 4, in a case of a STIX-format cyber threat intelligence 11, the preprocessing unit 20 parses content of the cyber threat intelligence 11 described in the XML format by a parser. With this operation, the preprocessing unit 20 extracts each element included in the cyber threat intelligence 11. Note that, in a case where the cyber threat intelligence 11 is not structured according to the standard and the like and is described in a text report format, for example, the preprocessing unit 20 extracts an element to be extracted by using an existing natural language processing tool.

For example, the preprocessing unit 20 extracts an IP address such as "XXX.XXX.XXX.XXX" or "YYY.YYY.YYY.YYY" from a part sandwiched by tags of "AddressObj:Address_Value". Similarly, the preprocessing unit 20 extracts an attack way from a part sandwiched by tags of the tactics, techniques, and procedures (TTPs). Furthermore, the preprocessing unit 20 extracts courses of action from a part sandwiched by tags of the courses of action (Courses_Of_Action). Furthermore, the preprocessing unit 20 extracts vulnerability to be used from a part sandwiched by tags of the attack target (Exploit_Targets). Furthermore, the preprocessing unit 20 extracts a name of a campaign from a part sandwiched by tags of the campaign. Note that, in a case where no data exists, it is assumed that no information exist. Furthermore, in a case where a title of the cyber threat intelligence 11 includes a time stamp (time information) such as "report for certain malware, period", the time information is extracted.

Next, the preprocessing unit 20 determines whether or not the cyber threat intelligence 11 is related to the target campaign 12 on the basis of the element extracted from the cyber threat intelligence 11 (S11). Specifically, the preprocessing unit 20 determines whether or not the cyber threat intelligence 11 is targeted on the target campaign 12 on the basis of whether or not the campaign name in the element extracted from the cyber threat intelligence 11 matches the campaign name of the target campaign 12.

In a case where the cyber threat intelligence 11 is targeted on the target campaign 12 (S11: YES), the preprocessing unit 20 stores an IP address when the IP address indicating the attack source extracted from the cyber threat intelligence 11 is not stored in the IP address group information 21. Furthermore, the preprocessing unit 20 stores the IP address extracted from the cyber threat intelligence 11 in association with an ID indicating the cyber threat intelligence 11 in the cyber threat intelligence and IP address group information 22 (S12).

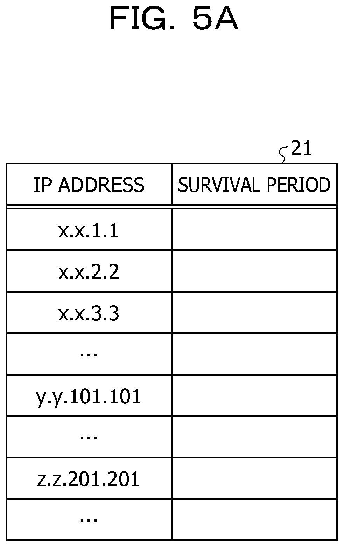

FIG. 5A is an explanatory diagram illustrating an example of the IP address group information 21. As illustrated in FIG. 5A, the IP address group information 21 is, for example, a data table that stores an IP address extracted from the cyber threat intelligence 11 such as "x.x.1.1" and information related to the IP address (for example, "survival period").

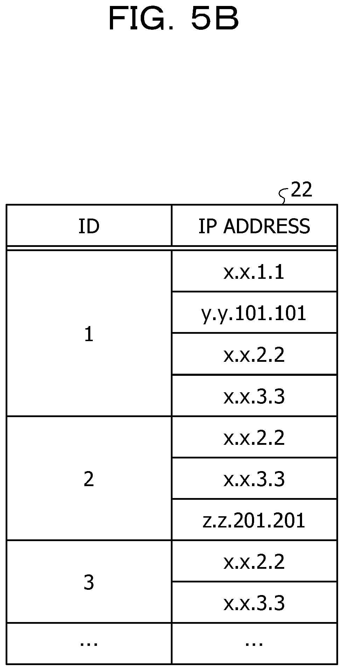

FIG. 5B is an explanatory diagram illustrating an example of the cyber threat intelligence and IP address group information 22. As illustrated in FIG. 5B, the cyber threat intelligence and IP address group information 22 is, for example, a data table that stores information regarding the IP address indicating the attack source extracted from the cyber threat intelligence 11 for each ID indicating the cyber threat intelligence 11. For example, the cyber threat intelligence and IP address group information 22 stores an IP address such as "x.x.1.1", "y.y.101.101", "x.x.2.2", or "x.x.3.3" extracted from the cyber threat intelligence 11 in association with a cyber threat intelligence 11 of which an ID is "1".

Note that, in a case where the cyber threat intelligence 11 is not targeted on the target campaign 12 (S11: NO), the preprocessing unit 20 skips the process in S12 and proceeds to S13.

Next, the preprocessing unit 20 determines whether or not an unselected cyber threat intelligence 11 exists as an element to be extracted in the cyber threat intelligence DB 10 (S13). In a case where the unselected cyber threat intelligence 11 exists (S13: YES), the preprocessing unit 20 selects the unselected cyber threat intelligence 11 as the element to be extracted and returns the process to S10. In a case where the unselected cyber threat intelligence 11 does not exist (S13: NO), the process on all the cyber threat intelligences 11 is completed. Therefore, the preprocessing unit 20 terminates the preprocessing.

Returning to FIG. 1, the survival period learning unit 30 specifies a plurality of addresses (for example, IP address) of the cyberattack source on the basis of the cyber threat intelligence and IP address group information 22 and the IP address group information 21 on which the preprocessing has been executed. Then, the survival period learning unit 30 specifies a survival period of each specified address by a survival period learning process and stores the specified result in survival period information 32 and IP address group information 31. In other words, the survival period learning unit 30 is an example of a specification unit.

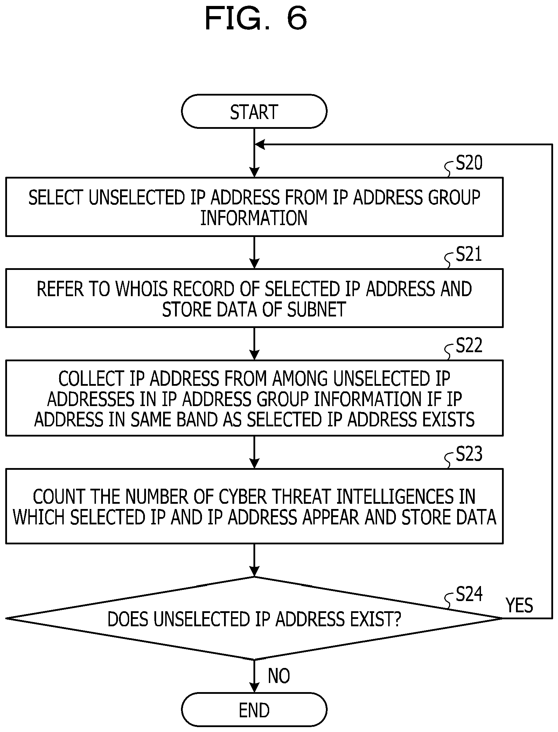

FIG. 6 is a flowchart illustrating an example of the survival period learning process. As illustrated in FIG. 6, when the survival period learning process is started, the survival period learning unit 30 selects an unselected IP address from the input IP address group information 21 (S20). Specifically, the survival period learning unit 30 selects an IP address in which data is not stored in the "survival period" from among the IP address group information 21.

Next, the survival period learning unit 30 refers to a WHOIS record of the selected IP address and stores data of a subnet that is an address range of the IP address in the survival period information 32 (S21).

Note that the IP address range (subnet) is a group of several IP addresses and, for example, is a group of addresses in the CIDR notation (CIDR block) such as "AAA.AAA.AAA.0/22", or the like. In the present embodiment, the CIDR block is exemplified as the IP address range (subnet). However, the IP addresses may be grouped for each domain, and the IP address range is not particularly limited to the CIDR block.

Next, the survival period learning unit 30 collects an IP address in the same band as the IP address selected from among unselected IP addresses of the IP address group information 21 on the basis of the data of the IP address range if the above IP address exists (S22).

Next, the survival period learning unit 30 refers to the cyber threat intelligence and IP address group information 22 and counts the number of cyber threat intelligences 11 in which the IP address selected in S20 and the IP address collected in S22 appear, respectively. Next, on the basis of the counted number, the survival period learning unit 30 obtains a survival period of each IP address and stores the obtained survival period in the IP address group information 21 and the survival period information 32 (S23) .

The cyber threat intelligence 11 is issued at a predetermined cycle, for example, as a weekly report and the like. Therefore, the IP address described in the cyber threat intelligence 11 is an address that survives (is observed) as an attack source in the week in the cyber threat intelligence 11. Therefore, the survival period learning unit 30 can obtain the survival period (survival week) of the IP address by counting the number of cyber threat intelligences 11 in which the IP address appears.

Note that, in the present embodiment, it is assumed that the number of cyber threat intelligences 11 in which the IP address exists correspond to the number of weeks in which the IP address survives. However, the method of calculating the survival period is not limited to the above method. For example, in a case where a daily report is assumed, the number of survival days can be obtained as a survival period by counting the number of cyber threat intelligences 11. Furthermore, in a case where the cyber threat intelligence 11 includes date information, the cyber threat intelligences 11 in which the IP address appears are arranged in chronological order, and a survival period such as "2018/1/1 to 2018/1/31" may be calculated on the basis of the first (2018/1/1) and the last (2018/1/31) date information.

Next, the survival period learning unit 30 determines whether or not an unselected IP address exists in the IP address group information 21 (S24). In a case where the unselected IP address exists (S24: YES), the survival period learning unit 30 selects the unselected IP address and returns the process to S20. In a case where the unselected IP address does not exist (S24: NO), the process on all the IP addresses is completed. Therefore, the survival period learning unit 30 terminates the survival period learning process.

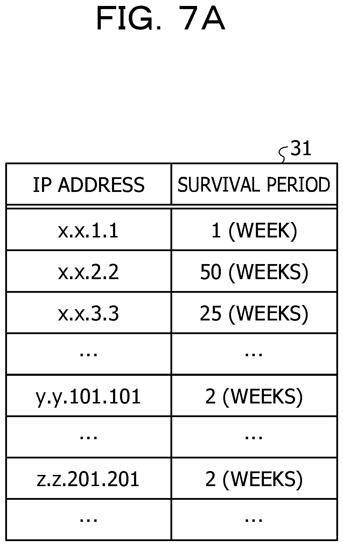

FIG. 7A is an explanatory diagram illustrating an example of the IP address group information 31. As illustrated in FIG. 7A, the IP address group information 31 stores information regarding the survival period of each IP address in the IP address group information 21. For example, for "x.x.1.1", a survival period "one (week)" specified by the survival period learning unit 30 is stored.

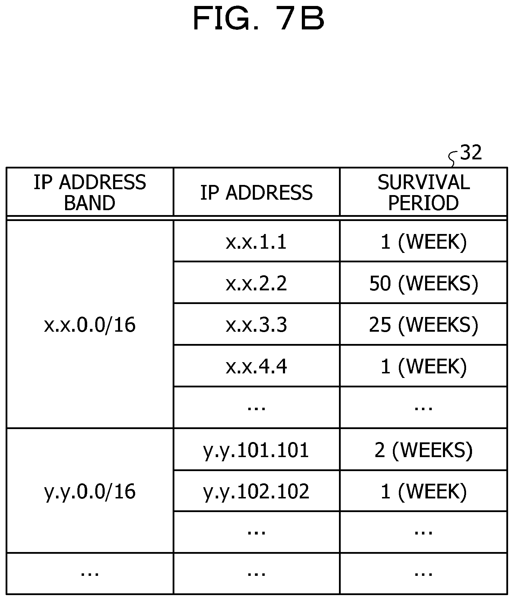

FIG. 7B is an explanatory diagram illustrating an example of the survival period information 32. The survival period information 32 is, for example, a data table that stores information for each IP address range (IP address included in band and survival period or the like). For example, the survival period information 32 stores IP addresses "x.x.1.1", "x.x.2.2", "x.x.3.3", "x.x.4.4", and... specified by the survival period learning unit 30 for an IP address range of "x.x.0.0/16". Furthermore, for each IP address, the survival period specified by the survival period learning unit 30 is stored. For example, "one (week)" is stored in "x.x.1.1", "50 (week)" is stored in "x.x.2.2", "25 (week)" is stored in "x.x.3.3", and "one (week)" is stored in "x.x.4.4".

Returning to FIG. 1, the detection unit 40 executes a detection process on the basis of the IP address group information 31 and the survival period information 32 and detects an address range or some addresses included in the address range as a monitoring target that is a significant monitoring target for analysis of the cyberattack. Specifically, the detection unit 40 compares a distribution of survival periods corresponding to the plurality of IP addresses specified by the survival period learning unit 30 and a distribution of the survival periods for each address range. Next, the detection unit 40 determines an address range or some addresses included in the address range as a monitoring target according to the comparison result of the distributions. In other words, the detection unit 40 is an example of a determination unit.

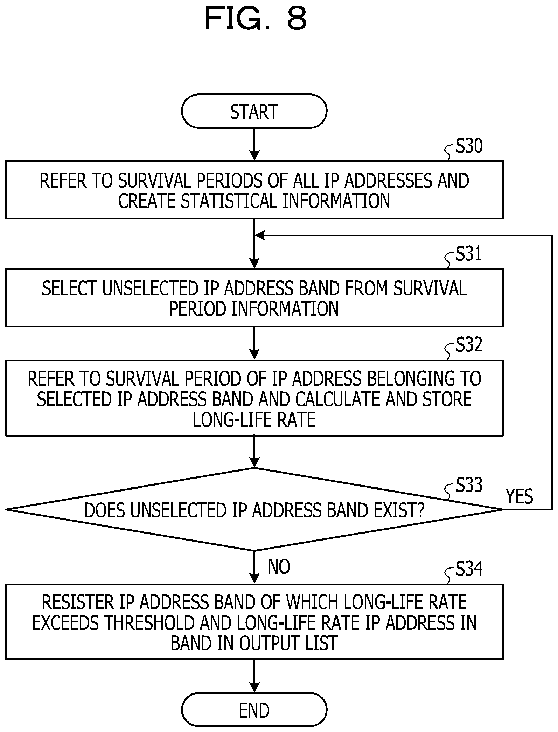

FIG. 8 is a flowchart illustrating an example of the detection process. As illustrated in FIG. 8, when the detection process is started, the detection unit 40 refers to survival periods of all the IP addresses with reference to the IP address group information 31 and creates overall statistical information (S30).

Here, in the present embodiment, because a long-life IP address that is not a single-use IP address is focused, a long-life threshold used to identify the long-life IP address is obtained. For example, the detection unit 40 calculates a survival period which is in top 5% of the survival periods from the overall statistical information and sets the calculated value as a long-life threshold.

Next, the detection unit 40 selects an unselected IP address range from the survival period information 32 (S31). Next, the detection unit 40 refers to a survival period of an IP address belonging to the selected IP address range from the survival period information 32 and creates statistical information regarding the selected IP address range. Here, the detection unit 40 calculates a ratio of the long-life IP address in the IP address range (long-life rate) on the basis of the calculated long-life threshold by using the following formula (1) and stores a calculation result in the survival period information 32 (S32).

Long-life rate = (the number of IP addresses having a survival period exceeding the long-life threshold in the IP address range)/(the number of IP addresses in the IP address range)... (1)

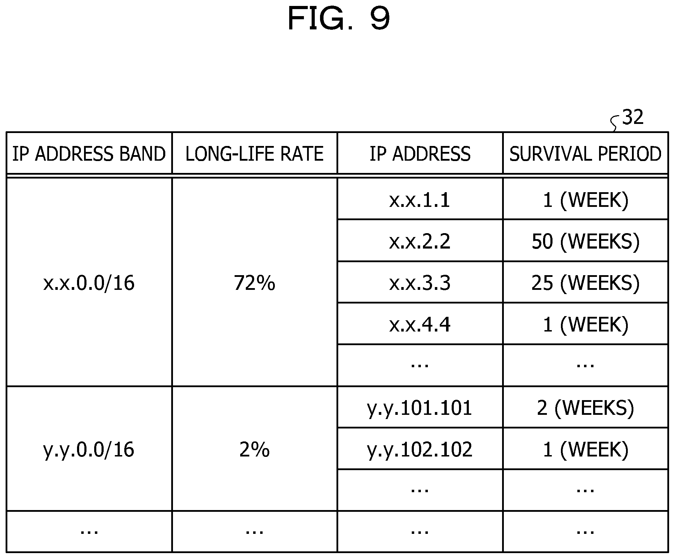

FIG. 9 is an explanatory diagram illustrating an example of the survival period information 32, and more specifically, a diagram illustrating an example of the survival period information 32 that stores the calculation result of the long-life rate. As illustrated in FIG. 9, the survival period information 32 stores a ratio of the long-life IP address (long-life rate) calculated by the formula (1) for each IP address range.

Next, the detection unit 40 determines whether or not an unselected IP address range exists in the survival period information 32 (S33). In a case where the unselected IP address range exists (S33: YES), the detection unit 40 selects the unselected IP address range and returns the process to S31. In a case where the unselected IP address range does not exist (S33: NO), the detection unit 40 proceeds the process to S34.

In S34, the detection unit 40 registers the IP address range to be monitored and the long-life IP address in the band in the output list 51 on the basis of the long-life rate of each IP address range in the survival period information 32. Specifically, the detection unit 40 registers the IP address range in which the long-life rate exceeds a predetermined threshold and an IP address that exceeds the long-life threshold (referred to as long-life IP address) in the output list 51 as monitoring targets (S34) and terminates the process.

Because the long-life threshold is set with reference to 5% for the overall distribution, for example, this threshold is set to be higher than 5%. With this setting, the detection unit 40 can obtain the IP address range of which the long-life rate is higher than that in the overall distribution of the survival periods and the long-life IP address in the IP address range.

Note that, in the present embodiment, the long-life threshold based on the top 5% in the distribution as the statistical information is calculated, and the overall distribution and the distribution for each IP address range are compared with each other by using the threshold with which the long-life rate in the IP address range exceeds 5%. Then, the IP address range in which the long-life rate exceeds 5% with respect to the overall distribution and the long-life IP address in the IP address range are monitored. However, other statistical information may be used to compare the distributions. For example, by calculating an average of the survival periods, the IP address range to be monitored and the IP address in the IP address range may be obtained on the basis of a difference between an average in the overall distribution and an average in the IP address range.

Returning to FIG. 1, the output unit 50 outputs a detection result (output list 51) by the detection unit 40 to display the detection result on a display, a file, or the like.

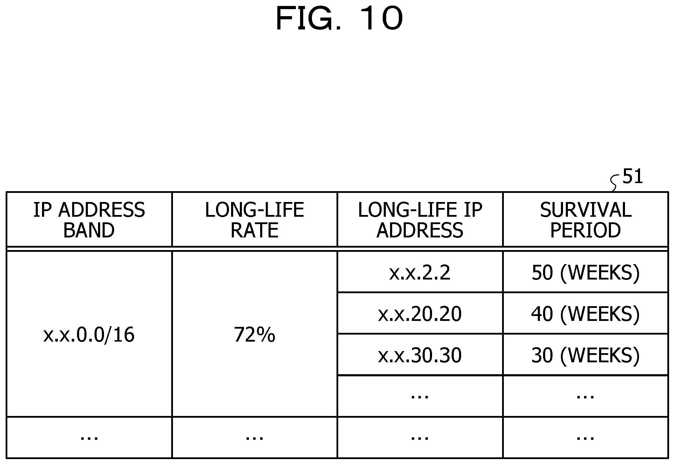

FIG. 10 is an explanatory diagram illustrating an example of the output list 51. As illustrated in FIG. 10, the output list 51 includes an IP address range to be monitored, a long-life rate of the band, and a long-life IP address in the band and a survival period of the IP address. For example, the output list 51 stores a long-life rate of "72%" for an IP address range of "x.x.0.0/16" to be monitored. Furthermore, a long-life IP address and a survival period in the IP address range of "x.x.0.0/16" are also stored. For example, "50 (week)" is stored in "x.x.2.2", "40 (week)" is stored in "x.x.20.20", and "30 (week)" is stored in "x.x.30.30".

From the output list 51, a user can easily find an IP address range of which the survival period of the attack source address is different from that of the overall distribution or a long-life IP address included in the address range as monitoring targets.

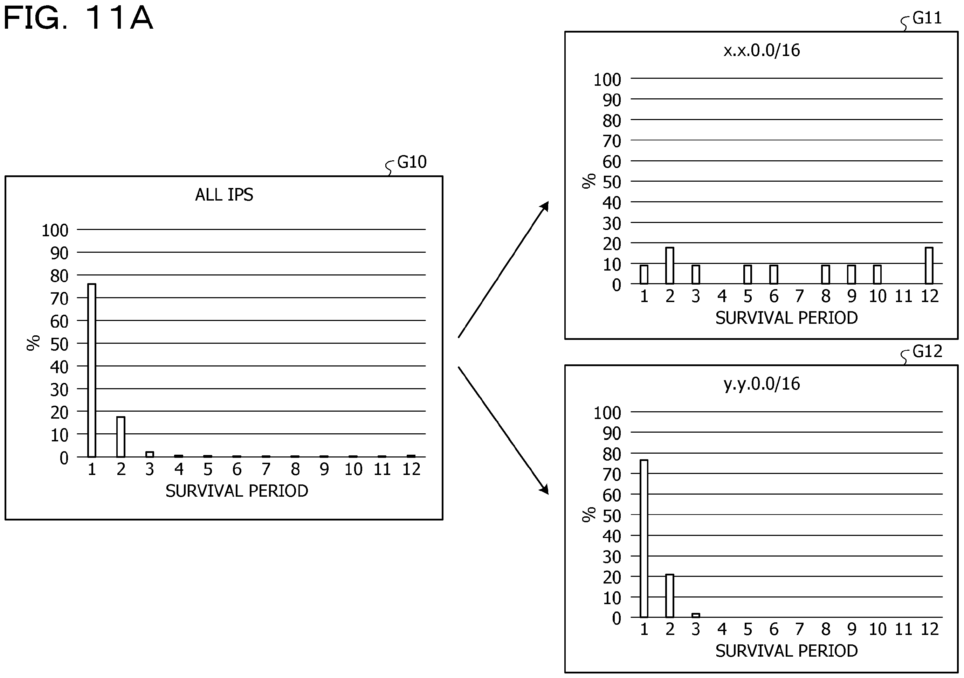

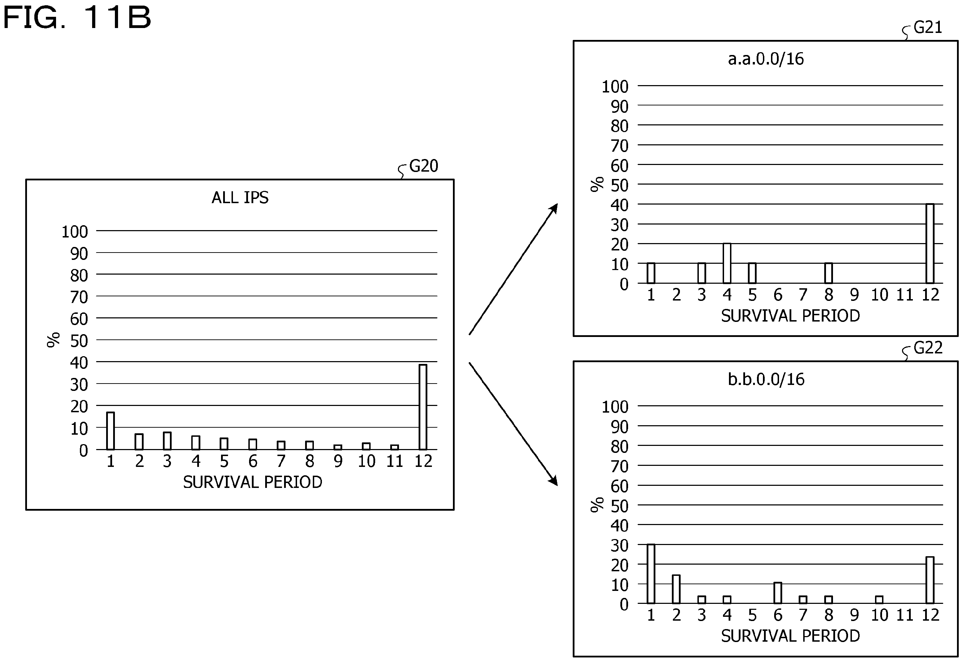

FIGs. 11A and 11B are explanatory diagrams for explaining the distribution of the survival periods.

A graph G10 illustrated in FIG. 11A is a histogram with respect to all IPs of the cyber threat intelligence 11 against botnets. In the graph G10, equal to or more than 90% of IPs disappear from the cyber threat intelligence 11 within two weeks. That is, most of the IPs in the entire cyber threat intelligences 11 are single-use IP addresses.

A graph G11 illustrated in FIG. 11A is a histogram for an IP of which the IP address range is "x.x.0.0/16". Furthermore, a graph G12 is a histogram for an IP of which an IP address range is "y.y.0.0/16". In the present embodiment, by comparing the overall distribution with the distribution in the IP address range, "x.x.0.0/16" having a different distribution is set as a monitoring target.

Therefore, by setting "x.x.0.0/16" of the histogram as illustrated in the graph G11 as a monitoring target, the long-life rate becomes higher than that of the overall distribution. In this example, if the survival period is equal to or longer than three weeks in consideration of the values in top 5% of the distribution, the IP is a long-life IP. Therefore, the long-life rate of "x.x.0.0/16" is significantly higher. Because such an IP address range means that the attacker uses each IP address for a long time, there is a high possibility that an attacker's intention is more reflected than that in other band. Therefore, by setting "x.x.0.0/16" as in the graph G11 having a high long-life rate as a monitoring target, the cyberattack can be efficiently analyzed.

A graph G20 illustrated in FIG. 11B is a histogram with respect to all IPs of the cyber threat intelligence 11 against downloaders. A graph G21 is a histogram with respect to an IP of which an IP address range is "a.a.0.0/16". Furthermore, a graph G22 is a histogram with respect to an IP of which an IP address range is "b.b.0.0/16". Nearly 40% of the downloaders have a survival period equal to or longer than 12 weeks, and most of the IP addresses are used in any IP address range for a certain period of time. Therefore, a ratio of the single-use IP address is not very high, and a value of the IP address that is used for a long term is not relatively high in comparison with the long-life IP address of the botnet.

### (Modification)

Note that the survival period learning unit 30 may access a predetermined information processing server that manages a Domain Name System (DNS) and specify a domain corresponding to at least some addresses of the addresses of the plurality of specified cyberattack sources.

Furthermore, the output unit 50 determines whether or not an address corresponding to a domain specified by accessing the DNS again at a time when the survival period learning unit 30 specifies the domain or at a time different from the time of the access to the DNS is different from a previous address. Next, in a case where the address corresponding to the specified domain is different from the previous address, the output unit 50 includes information regarding the newly specified address in the output list 51 and outputs the output list 51.

In this way, the information processing apparatus 1 may specify the domain corresponding to the address of the cyberattack source and track the address corresponding to the domain. With this operation, the user can easily track another IP address, which is associated with the domain and different from the previous address, for the domain corresponding to the addresses of the plurality of cyberattack sources specified by the cyber threat intelligence 11.

As described above, the information processing apparatus 1 includes the preprocessing unit 20, the survival period learning unit 30, the detection unit 40, and the output unit 50. The preprocessing unit 20 collects the plurality of cyber threat intelligences 11. The survival period learning unit 30 analyzes the plurality of collected cyber threat intelligences 11 and specifies a plurality of addresses of the cyberattack sources included in the plurality of cyber threat intelligences 11. Furthermore, the survival period learning unit 30 specifies a period in which each of the specified addresses of the plurality of cyberattack sources is observed (survival period). The detection unit 40 compares the distribution of the survival periods corresponding to the plurality of specified addresses and the distribution of the survival periods for each address range. Next, the detection unit 40 determines an address range or some addresses included in the address range as a monitoring target according to the comparison result of the distributions. The output unit 50 outputs information regarding the address range determined by the detection unit 40 or some addresses included in the address range.

With this operation, the user can easily find the address range of which the distribution of the survival periods of the plurality of cyberattack sources is different from the distribution of the survival periods for each address range and some addresses included in the address range as monitoring targets. The distribution of the survival periods of the monitoring target is different from, for example, the overall distribution in which the ratio of the single-use IP address is significantly high, and there is a high possibility that the attacker intentionally uses these monitoring targets. Therefore, a user can easily find a significant monitoring target for the analysis of the cyberattacks.

Furthermore, the survival period learning unit 30 accesses the predetermined information processing server (DNS) and specifies the domain corresponding to at least a part of the addresses of the plurality of specified cyberattack sources. In a case where the address corresponding to the domain specified by accessing the DNS again at a time when the domain is specified or at a time different from the time of the access to the DNS is different from a previous address, the output unit 50 outputs information regarding the newly specified address. With this operation, the user can track another IP address, which is associated with the domain and different from the previous address, for the domain corresponding to the addresses of the plurality of cyberattack sources specified by the cyber threat intelligence 11, and it is possible to enhance the analysis quality.

Furthermore, the detection unit 40 determines whether or not a ratio of an address which is observed for a longer period than a predetermined threshold (long-life address) in the distribution of the survival periods corresponding to the plurality of specified addresses is more than that in the distribution of the survival periods for each address range. Next, the detection unit 40 determines an address range that is determined as having the higher ratio or some addresses in the address range as monitoring targets. As a result, the user can easily find the address range having a higher long-life address ratio or some addresses included in the address range as monitoring targets.

Furthermore, the detection unit 40 determines an address (long-life address) that is observed for a longer period than a predetermined threshold from among the addresses included in the address range as a monitoring target. As a result, the user can easily find the long-life address as a monitoring target.

Furthermore, the preprocessing unit 20 collects the cyber threat intelligence 11 related to a predetermined campaign such as the target campaign 12 from the cyber threat intelligence DB 10 so that the user can easily find the address range regarding the predetermined campaign or some addresses included in the address range.

Furthermore, the survival period learning unit 30 specifies a survival period by counting the cyber threat intelligences 11 each including the specified address of each of the plurality of cyberattack sources in chronological order. As a result, the information processing apparatus 1 counts the number of cyber threat intelligences 11 in which the address of the cyberattack source is posted from the cyber threat intelligences 11 that is regularly issued such as a weekly report or a monthly report and can easily specify the survival period.

Note that the components of each of the illustrated devices are not necessarily and physically configured as illustrated in the drawings. In other words, the specific aspects of separation and integration of each of the apparatus and devices are not limited to the illustrated aspects, and all or some of the apparatus or devices can be functionally or physically separated and integrated in any unit, in accordance with various loads, use status, and the like.

In addition, various processing functions executed with the information processing apparatus 1 may be entirely or optionally partially executed on a central processing unit (CPU) (or a microcomputer, such as a microprocessor unit (MPU) or a micro controller unit (MCU)). Furthermore, it is needless to say that whole or any part of various processing functions may be executed by a program to be analyzed and executed on a CPU (or microcomputer such as MPU or MCU), or on hardware by wired logic. In addition, various processing functions executed with the information processing apparatus 1 may be executed by a plurality of computers in cooperation through cloud computing.

Meanwhile, the various processes described in the above embodiment can be achieved by execution of a prepared program on a computer. Thus, there will be described below an example of a computer (hardware) that executes a program having functions similar to the above embodiment. FIG. 12 is a block diagram illustrating an exemplary hardware configuration of the information processing apparatus 1 according to the embodiment.

As illustrated in FIG. 12, the information processing apparatus 1 includes a CPU 101 that executes various types of arithmetic processing, an input device 102 that receives data input, the monitor 103, and a speaker 104. In addition, the information processing apparatus 1 includes a medium reading device 105 that reads a program and the like from a storage medium, an interface device 106 that is used for connecting to various devices, and a communication device 107 that makes communicative connection with an external device in a wired or wireless manner. Furthermore, the information processing apparatus 1 further includes a RAM 108 for temporarily storing various types of information, and a hard disk device 109. Furthermore, each of the units (501 to 509) in the information processing apparatus 1 is connected to a bus 110.

The hard disk device 109 stores a program 111 used to execute various processes of the preprocessing unit 20, the survival period learning unit 30, the detection unit 40, the output unit 50, or the like described in the embodiment. In addition, the hard disk device 109 stores various types of data 112 to which the program 111 refers. The input device 102 receives, for example, an input of operation information from an operator. The monitor 103 displays, for example, various screens operated by the operator. The interface device 106 is connected to, for example, a printing device or the like. The communication device 107 is connected to a communication network such as a local area network (LAN), and exchanges various types of information with the external device via the communication network.

The CPU 101 reads the program 111 stored in the hard disk device 109 and develops and executes the program 111 on the RAM 108 so as to execute various processes of the preprocessing unit 20, the survival period learning unit 30, the detection unit 40, the output unit 50, or the like. Note that, the program 111 may not be stored in the hard disk device 109. For example, the program 111 that is stored in a storage medium that can be read by the information processing apparatus 1 may be read and executed. The storage medium which can be read by the information processing apparatus 1 corresponds to, for example, a portable recording medium such as a CD-ROM, a DVD disk, and a universal serial bus (USB) memory, a semiconductor memory such as a flash memory, a hard disk drive, and the like. Alternatively, the program 111 may be prestored in a device connected to a public line, the Internet, a LAN, or the like, and the information processing apparatus 1 may read the program 111 from the device to execute the program 111.

### REFERENCE SIGNS LIST

- 1: information processing apparatus
- 10: cyber threat intelligence DB
- 11: cyber threat intelligence
- 11a to 11f: area
- 12: target campaign
- 20: preprocessing unit
- 21: IP address group information
- 22: cyber threat intelligence and IP address group information
- 30: survival period learning unit
- 31: IP address group information
- 32: survival period information
- 40: detection unit
- 50: output unit
- 51: output list
- 101: CPU
- 102: input device
- 103: monitor
- 104: speaker
- 105: medium reading device
- 106: interface device
- 107: communication device
- 108: RAM
- 109: hard disk device
- 110: bus
- 111: program
- 112: various types of data
- G10 to G22: graph

## Claims

1. A cyberattack information analysis program comprising instructions which, when the program is executed by a computer, cause the computer to execute processes comprising:
a collecting process of collecting a plurality of pieces of cyberattack information;
a specifying process of analyzing the plurality of pieces of collected cyberattack information, specifying a plurality of addresses of cyberattack sources included in the plurality of pieces of cyberattack information, and specifying a period in which each of the specified addresses of the plurality of cyberattack sources is observed;
a determining process of determining an address range or some addresses included in the address range as monitoring targets according to a result of comparing a first period distribution of an observed period corresponding to the plurality of specified addresses and a second period distribution of an observed period for the address range; and
an outputting process of outputting information regarding the determined address range or some addresses included in the address range,
**characterised in that**
the determining process determines an address range corresponding to the second period distribution or some addresses included in the address range as monitoring targets in a case where a ratio of addresses observed for a longer period than a predetermined threshold in the second period distribution is more than that in the first period distribution when the first period distribution and the second period distribution are compared.

2. The cyberattack information analysis program according to claim 1, wherein
the specifying process accesses a predetermined information processing server and specifies a domain corresponding to at least a part of the specified addresses of the plurality of cyberattack sources, and
the outputting process outputs information regarding the newly specified address in a case where an address corresponding to the domain specified by accessing the information processing server again at a time when the domain is specified or a time different from the time of the access to the information processing server is different from the address.

3. The cyberattack information analysis program according to claim 1, wherein
the determining process determines an address that is observed for a longer period than a predetermined threshold among addresses included in the address range as a monitoring target.

4. The cyberattack information analysis program according to claim 1, wherein
the collecting process collects cyberattack information related to a predetermined campaign.

5. The cyberattack information analysis program according to claim 1, wherein
the specifyingprocess specifies the observed period by counting cyberattack information including each specified address of the plurality of cyberattack sources from among cyberattack information issued at a predetermined cycle.

6. A cyberattack information analysis method for causing a computer to execute processes comprising:
a collecting process of collecting a plurality of pieces of cyberattack information;
a specifying process of analyzing the plurality of pieces of collected cyberattack information, specifying a plurality of addresses of cyberattack sources included in the plurality of pieces of cyberattack information, and specifying a period in which each of the specified addresses of the plurality of cyberattack sources is observed;
a determining process of determining an address range or some addresses included in the address range as monitoring targets according to a result of comparing a first period distribution of an observed period corresponding to the plurality of specified addresses and a second period distribution of an observed period for the address range; and
an outputting process of outputting information regarding the determined address range or some addresses included in the address range, **characterised in that**
the determining process determines an address range corresponding to the second period distribution or some addresses included in the address range as monitoring targets in a case where a ratio of addresses observed for a longer period than a predetermined threshold in the second period distribution is more than that in the first period distribution when the first period distribution and the second period distribution are compared.

7. The cyberattack information analysis method according to claim 6, wherein
the specifying process accesses a predetermined information processing server and specifies a domain corresponding to at least a part of the specified addresses of the plurality of cyberattack sources, and
the outputting process outputs information regarding the newly specified address in a case where an address corresponding to the domain specified by accessing the information processing server again at a time when the domain is specified or a time different from the time of the access to the information processing server is different from the address.

8. The cyberattack information analysis method according to claim 6, wherein
the determining process determines an address that is observed for a longer period than a predetermined threshold among addresses included in the address range as a monitoring target.

9. The cyberattack information analysis method according to claim 6, wherein
the collecting process collects cyberattack information related to a predetermined campaign.

10. The cyberattack information analysis method according to claim 6, wherein
the specifying process specifies the observed period by counting cyberattack information each including the specified address of each of the plurality of cyberattack sources in chronological order.

11. An information processing apparatus (1) comprising:
a collection unit (20) configured to collect a plurality of pieces of cyberattack information;
a specification unit (30) configured to analyze the plurality of pieces of collected cyberattack information, specify a plurality of addresses of cyberattack sources included in the plurality of pieces of cyberattack information, and specify a period in which each of the specified addresses of the plurality of cyberattack sources is observed;
a determination unit (40) configured to determine an address range or some addresses included in the address range as monitoring targets according to a result of comparing a first period distribution of an observed period corresponding to the plurality of specified addresses and a second period distribution of an observed period for the address range; and
an output unit (50) configured to output information regarding the determined address range or some addresses included in the address range,
**characterised in that**
the determination unit (40) is configured to determine an address range corresponding to the second period distribution or some addresses included in the address range as monitoring targets in a case where a ratio of addresses observed for a longer period than a predetermined threshold in the second period distribution is more than that in the first period distribution when the first period distribution and the second period distribution are compared.

12. The information processing apparatus (1) according to claim 11, wherein
the specification unit (30) is configured to access a predetermined information processing server and specifies a domain corresponding to at least a part of the specified addresses of the plurality of cyberattack sources, and
the output unit (50) is configured to output information regarding the newly specified address in a case where an address corresponding to the domain specified by accessing the information processing server again at a time when the domain is specified or a time different from the time of the access to the information processing server is different from the address.

## Patentansprüche

1. Programm zur Analyse von Cyberangriffsinformationen, umfassend Anweisungen, die, wenn das Programm von einem Computer ausgeführt wird, veranlassen, dass der Computer Prozesse ausführt, die umfassen:
einen Sammelprozess des Sammelns einer Vielzahl von Elementen von Cyberangriffsinformationen;
einen Spezifizierungsprozess des Analysierens der Vielzahl von Elementen von gesammelten Cyberangriffsinformationen, des Spezifizierens einer Vielzahl von Adressen von Cyberangriffsquellen, die in der Vielzahl von Elementen von Cyberangriffsinformationen enthalten sind, und des Spezifizierens eines Zeitraums, über den jede der spezifizierten Adressen der Vielzahl von Cyberangriffsquellen beobachtet wird;
einen Bestimmungsprozess des Bestimmens eines Adressenbereichs oder einiger Adressen, die im Adressenbereich enthalten sind, als Überwachungsziele gemäß einem Ergebnis eines Vergleichens einer ersten Zeitraumverteilung eines beobachteten Zeitraums, die der Vielzahl von spezifizierten Adressen entspricht, und einer zweiten Zeitraumverteilung eines beobachteten Zeitraums für den Adressenbereich; und
einen Ausgabeprozess des Ausgebens von Informationen bezüglich des bestimmten Adressenbereichs oder einiger Adressen, die im Adressenbereich enthalten sind,
**dadurch gekennzeichnet, dass**
der Bestimmungsprozess einen Adressenbereich, der der zweiten Zeitraumverteilung entspricht, oder einige Adressen, die im Adressenbereich enthalten sind, als Überwachungsziele bestimmt, falls ein Anteil von Adressen, die über einen längeren Zeitraum als eine vorbestimmte Schwelle beobachtet werden, in der zweiten Zeitraumverteilung größer ist als jener in der ersten Zeitraumverteilung, wenn die erste Zeitraumverteilung und die zweite Zeitraumverteilung verglichen werden.

2. Programm zur Analyse von Cyberangriffsinformationen nach Anspruch 1, wobei
der Spezifizierungsprozess auf einen vorbestimmten Informationsverarbeitungsserver zugreift und eine Domäne spezifiziert, die mindestens einem Teil der spezifizierten Adressen der Vielzahl von Cyberangriffsquellen entspricht, und
der Ausgabeprozess Informationen bezüglich der neu spezifizierten Adresse ausgibt, falls sich eine Adresse, die der Domäne entspricht, die spezifiziert wird durch erneutes Zugreifen auf den Informationsverarbeitungsserver zu einem Zeitpunkt, zu dem die Domäne spezifiziert wird, oder einem Zeitpunkt, der sich von dem Zeitpunkt des Zugriffs auf den Informationsverarbeitungsserver unterscheidet, von der Adresse unterscheidet.

3. Programm zur Analyse von Cyberangriffsinformationen nach Anspruch 1, wobei
der Bestimmungsprozess aus Adressen, die im Adressenbereich enthalten sind, eine Adresse als ein Überwachungsziel bestimmt, die über einen längeren Zeitraum als eine vorbestimmte Schwelle beobachtet wird.

4. Programm zur Analyse von Cyberangriffsinformationen nach Anspruch 1, wobei
der Sammelprozess Cyberangriffsinformationen, die mit einer vorbestimmten Kampagne verbunden sind, sammelt.

5. Programm zur Analyse von Cyberangriffsinformationen nach Anspruch 1, wobei
der Spezifizierungsprozess den beobachteten Zeitraum spezifiziert, indem Cyberangriffsinformationen gezählt werden, die jede spezifizierte Adresse der Vielzahl von Cyberangriffsquellen enthalten, aus Cyberangriffsinformationen, die in einem vorbestimmten Zyklus erstellt werden.

6. Verfahren zur Analyse von Cyberangriffsinformationen, um zu veranlassen, dass ein Computer Prozesse ausführt, die umfassen:
einen Sammelprozess des Sammelns einer Vielzahl von Elementen von Cyberangriffsinformationen;
einen Spezifizierungsprozess des Analysierens der Vielzahl von Elementen von gesammelten Cyberangriffsinformationen, des Spezifizierens einer Vielzahl von Adressen von Cyberangriffsquellen, die in der Vielzahl von Elementen von Cyberangriffsinformationen enthalten sind, und des Spezifizierens eines Zeitraums, über den jede der spezifizierten Adressen der Vielzahl von Cyberangriffsquellen beobachtet wird;
einen Bestimmungsprozess des Bestimmens eines Adressenbereichs oder einiger Adressen, die im Adressenbereich enthalten sind, als Überwachungsziele gemäß einem Ergebnis eines Vergleichens einer ersten Zeitraumverteilung eines beobachteten Zeitraums, die der Vielzahl von spezifizierten Adressen entspricht, und einer zweiten Zeitraumverteilung eines beobachteten Zeitraums für den Adressenbereich; und
einen Ausgabeprozess des Ausgebens von Informationen bezüglich des bestimmten Adressenbereichs oder einiger Adressen, die im Adressenbereich enthalten sind, **dadurch gekennzeichnet, dass**
der Bestimmungsprozess einen Adressenbereich, der der zweiten Zeitraumverteilung entspricht, oder einige Adressen, die im Adressenbereich enthalten sind, als Überwachungsziele bestimmt, falls ein Anteil von Adressen, die über einen längeren Zeitraum als eine vorbestimmte Schwelle beobachtet werden, in der zweiten Zeitraumverteilung größer ist als jener in der ersten Zeitraumverteilung, wenn die erste Zeitraumverteilung und die zweite Zeitraumverteilung verglichen werden.

7. Verfahren zur Analyse von Cyberangriffsinformationen nach Anspruch 6, wobei
der Spezifizierungsprozess auf einen vorbestimmten Informationsverarbeitungsserver zugreift und eine Domäne spezifiziert, die mindestens einem Teil der spezifizierten Adressen der Vielzahl von Cyberangriffsquellen entspricht, und
der Ausgabeprozess Informationen bezüglich der neu spezifizierten Adresse ausgibt, falls sich eine Adresse, die der Domäne entspricht, die spezifiziert wird durch erneutes Zugreifen auf den Informationsverarbeitungsserver zu einem Zeitpunkt, zu dem die Domäne spezifiziert wird, oder einem Zeitpunkt, der sich von dem Zeitpunkt des Zugriffs auf den Informationsverarbeitungsserver unterscheidet, von der Adresse unterscheidet.

8. Verfahren zur Analyse von Cyberangriffsinformationen nach Anspruch 6, wobei
der Bestimmungsprozess aus Adressen, die im Adressenbereich enthalten sind, eine Adresse als ein Überwachungsziel bestimmt, die über einen längeren Zeitraum als eine vorbestimmte Schwelle beobachtet wird.

9. Verfahren zur Analyse von Cyberangriffsinformationen nach Anspruch 6, wobei
der Sammelprozess Cyberangriffsinformationen, die mit einer vorbestimmten Kampagne verbunden sind, sammelt.

10. Verfahren zur Analyse von Cyberangriffsinformationen nach Anspruch 6, wobei
der Spezifizierungsprozess den beobachteten Zeitraum spezifiziert, indem Cyberangriffsinformationen gezählt werden, die jeweils die spezifizierte Adresse jede der Vielzahl von Cyberangriffsquellen in chronologische Reihenfolge enthalten.

11. Informationsverarbeitungseinrichtung (1), umfassend:
eine Sammeleinheit (20), die konfiguriert ist, um eine Vielzahl von Elementen von Cyberangriffsinformationen zu sammeln;
eine Spezifizierungseinheit (30), die konfiguriert ist, um die Vielzahl von Elementen von gesammelten Cyberangriffsinformationen zu analysieren, eine Vielzahl von Adressen von Cyberangriffsquellen, die in der Vielzahl von Elementen von Cyberangriffsinformationen enthalten sind, zu spezifizieren, und einen Zeitraum zu spezifizieren, über den jede der spezifizierten Adressen der Vielzahl von Cyberangriffsquellen beobachtet wird;
eine Bestimmungseinheit (40), die konfiguriert ist, um einen Adressenbereich oder einige Adressen, die im Adressenbereich enthalten sind, als Überwachungsziele gemäß einem Ergebnis eines Vergleichens einer ersten Zeitraumverteilung eines beobachteten Zeitraums, die der Vielzahl von spezifizierten Adressen entspricht, und einer zweiten Zeitraumverteilung eines beobachteten Zeitraums für den Adressenbereich zu bestimmen; und
eine Ausgabeeinheit (50), die konfiguriert ist, um Informationen bezüglich des bestimmten Adressenbereichs oder einiger Adressen, die im Adressenbereich enthalten sind, auszugeben,
**dadurch gekennzeichnet, dass**
die Bestimmungseinheit (40) konfiguriert ist, um einen Adressenbereich, der der zweiten Zeitraumverteilung entspricht, oder einige Adressen, die im Adressenbereich enthalten sind, als Überwachungsziele zu bestimmen, falls ein Anteil von Adressen, die über einen längeren Zeitraum als eine vorbestimmte Schwelle beobachtet werden in der zweiten Zeitraumverteilung größer ist als jener in der ersten Zeitraumverteilung, wenn die erste Zeitraumverteilung und die zweite Zeitraumverteilung verglichen werden.

12. Informationsverarbeitungseinrichtung (1) nach Anspruch 11, wobei
die Spezifizierungseinheit (30) konfiguriert ist, um auf einen vorbestimmten Informationsverarbeitungsserver zuzugreifen und eine Domäne spezifiziert, die mindestens einem Teil der spezifizierten Adressen der Vielzahl von Cyberangriffsquellen entspricht, und
die Ausgabeeinheit (50) konfiguriert ist, um Informationen bezüglich der neu spezifizierten Adresse auszugeben, falls sich eine Adresse, die der Domäne entspricht, die spezifiziert wird durch erneutes Zugreifen auf den Informationsverarbeitungsserver zu einem Zeitpunkt, zu dem die Domäne spezifiziert wird, oder einem Zeitpunkt, der sich von dem Zeitpunkt des Zugriffs auf den Informationsverarbeitungsserver unterscheidet, von der Adresse unterscheidet.

## Revendications

1. Programme d'analyse d'informations de cyberattaque comprenant des instructions qui, lorsque le programme est exécuté par un ordinateur, amènent l'ordinateur à exécuter des procédés comprenant :
un procédé de collecte consistant à collecter une pluralité d'informations de cyberattaque ;
un procédé de spécification consistant à analyser la pluralité d'informations de cyberattaque collectées, à spécifier une pluralité d'adresses de sources de cyberattaque incluses dans la pluralité d'informations de cyberattaque, et à spécifier une période pendant laquelle chacune des adresses spécifiées de la pluralité de sources de cyberattaque est observée ;
un procédé de détermination consistant à déterminer une plage d'adresses ou certaines adresses incluses dans la plage d'adresses en tant que cibles de surveillance selon un résultat de comparaison d'une première distribution de période d'une période observée correspondant à la pluralité d'adresses spécifiées et d'une seconde distribution de période d'une période observée pour la plage d'adresses ; et
un procédé de délivrance en sortie consistant à délivrer en sortie des informations concernant la plage d'adresses déterminée ou certaines adresses incluses dans la plage d'adresses,
**caractérisé en ce que**
le procédé de détermination détermine une plage d'adresses correspondant à la seconde distribution de période ou certaines adresses incluses dans la plage d'adresses en tant que cibles de surveillance dans un cas où un rapport d'adresses observées pour une période plus longue qu'un seuil prédéterminé dans la seconde distribution de période est supérieur à celui dans la première distribution de période lorsque la première distribution de période et la seconde distribution de période sont comparées.

2. Programme d'analyse d'informations de cyberattaque selon la revendication 1, dans lequel
le procédé de spécification accède à un serveur de traitement d'informations prédéterminé et spécifie un domaine correspondant à au moins une partie des adresses spécifiées de la pluralité de sources de cyberattaque, et
le procédé de délivrance en sortie délivre en sortie des informations concernant l'adresse nouvellement spécifiée dans un cas où une adresse correspondant au domaine spécifié en accédant à nouveau au serveur de traitement d'informations à un moment où le domaine est spécifié ou à un moment différent du moment de l'accès au serveur de traitement d'informations est différente de l'adresse.

3. Programme d'analyse d'informations de cyberattaque selon la revendication 1, dans lequel
le procédé de détermination détermine une adresse qui est observée pendant une période plus longue qu'un seuil prédéterminé parmi les adresses incluses dans la plage d'adresses en tant que cible de surveillance.

4. Programme d'analyse d'informations de cyberattaque selon la revendication 1, dans lequel
le procédé de collecte collecte des informations de cyberattaque relatives à une campagne prédéterminée.

5. Programme d'analyse d'informations de cyberattaque selon la revendication 1, dans lequel
le procédé de spécification spécifie la période observée en comptant des informations de cyberattaque incluant chaque adresse spécifiée de la pluralité de sources de cyberattaque parmi des informations de cyberattaque émises lors d'un cycle prédéterminé.

6. Procédé d'analyse d'informations de cyberattaque pour amener un ordinateur à exécuter des procédés comprenant :
un procédé de collecte consistant à collecter une pluralité d'informations de cyberattaque ;
un procédé de spécification consistant à analyser la pluralité d'informations de cyberattaque collectées, à spécifier une pluralité d'adresses de sources de cyberattaque incluses dans la pluralité d'informations de cyberattaque, et à spécifier une période pendant laquelle chacune des adresses spécifiées de la pluralité de sources de cyberattaque est observée ;
un procédé de détermination consistant à déterminer une plage d'adresses ou certaines adresses incluses dans la plage d'adresses en tant que cibles de surveillance selon un résultat de comparaison d'une première distribution de période d'une période observée correspondant à la pluralité d'adresses spécifiées et d'une seconde distribution de période d'une période observée pour la plage d'adresses ; et
un procédé de délivrance en sortie consistant à délivrer en sortie des informations concernant la plage d'adresses déterminée ou certaines adresses incluses dans la plage d'adresses, **caractérisé en ce que**
le procédé de détermination détermine une plage d'adresses correspondant à la seconde distribution de période ou certaines adresses incluses dans la plage d'adresses en tant que cibles de surveillance dans un cas où un rapport d'adresses observées pour une période plus longue qu'un seuil prédéterminé dans la seconde distribution de période est supérieur à celui dans la première distribution de période lorsque la première distribution de période et la seconde distribution de période sont comparées.

7. Procédé d'analyse d'informations de cyberattaque selon la revendication 6, dans lequel
le procédé de spécification accède à un serveur de traitement d'informations prédéterminé et spécifie un domaine correspondant à au moins une partie des adresses spécifiées de la pluralité de sources de cyberattaque, et
le procédé de délivrance en sortie délivre en sortie des informations concernant l'adresse nouvellement spécifiée dans un cas où une adresse correspondant au domaine spécifié en accédant à nouveau au serveur de traitement d'informations à un moment où le domaine est spécifié ou à un moment différent du moment de l'accès au serveur de traitement d'informations est différente de l'adresse.

8. Procédé d'analyse d'informations de cyberattaque selon la revendication 6, dans lequel
le procédé de détermination détermine une adresse qui est observée pendant une période plus longue qu'un seuil prédéterminé parmi les adresses incluses dans la plage d'adresses en tant que cible de surveillance.

9. Procédé d'analyse d'informations de cyberattaque selon la revendication 6, dans lequel
le procédé de collecte collecte des informations de cyberattaque relatives à une campagne prédéterminée.

10. Procédé d'analyse d'informations de cyberattaque selon la revendication 6, dans lequel
le procédé de spécification spécifie la période observée en comptant des informations de cyberattaque incluant chacune l'adresse spécifiée de chacune de la pluralité de sources de cyberattaque dans l'ordre chronologique.

11. Appareil de traitement d'informations (1) comprenant :
une unité de collecte (20) configurée pour collecter une pluralité d'informations de cyberattaque ;
une unité de spécification (30) configurée pour analyser la pluralité d'informations de cyberattaque collectées, spécifier une pluralité d'adresses de sources de cyberattaque incluses dans la pluralité d'informations de cyberattaque, et spécifier une période pendant laquelle chacune des adresses spécifiées de la pluralité de sources de cyberattaque est observée ;
une unité de détermination (40) configurée pour déterminer une plage d'adresses ou certaines adresses incluses dans la plage d'adresses en tant que cibles de surveillance selon un résultat de comparaison d'une première distribution de période d'une période observée correspondant à la pluralité d'adresses spécifiées et d'une seconde distribution de période d'une période observée pour la plage d'adresses ; et
une unité de délivrance en sortie (50) configurée pour délivrer en sortie des informations concernant la plage d'adresses déterminée ou certaines adresses incluses dans la plage d'adresses,
**caractérisé en ce que**
l'unité de détermination (40) est configurée pour déterminer une plage d'adresses correspondant à la seconde distribution de période ou certaines adresses incluses dans la plage d'adresses en tant que cibles de surveillance dans un cas où un rapport d'adresses observées pour une période plus longue qu'un seuil prédéterminé dans la seconde distribution de période est supérieur à celui dans la première distribution de période lorsque la première distribution de période et la seconde distribution de période sont comparées.

12. Appareil de traitement d'informations (1) selon la revendication 11, dans lequel
l'unité de spécification (30) est configurée pour accéder à un serveur de traitement d'informations prédéterminé et spécifie un domaine correspondant à au moins une partie des adresses spécifiées de la pluralité de sources de cyberattaque, et
l'unité de délivrance en sortie (50) est configurée pour délivrer en sortie des informations concernant l'adresse nouvellement spécifiée dans un cas où une adresse correspondant au domaine spécifié en accédant à nouveau au serveur de traitement d'informations à un moment où le domaine est spécifié ou à un moment différent du moment de l'accès au serveur de traitement d'informations est différente de l'adresse.
